(19) Europäisches Patentamt
European Patent Office
Office européen des brevets

(11) **EP 3 038 923 B1**

(12) **FASCICULE DE BREVET EUROPEEN**

(45) Date de publication et mention de la délivrance du brevet:
**11.04.2018 Bulletin 2018/15**

(21) Numéro de dépôt: **14780422.3**

(22) Date de dépôt: **29.08.2014**

(51) Int Cl.:
**B64G 1/00** *(2006.01)*    **F03H 1/00** *(2006.01)*
**B64G 1/24** *(2006.01)*    **B64G 1/40** *(2006.01)*

(86) Numéro de dépôt international:
**PCT/EP2014/068343**

(87) Numéro de publication internationale:
**WO 2015/028588 (05.03.2015 Gazette 2015/09)**

(54) **PROCÉDÉ ET DISPOSITIF DE PROPULSION ÉLECTRIQUE DE SATELLITE**

VERFAHREN UND VORRICHTUNG FÜR ELEKTRISCHEN SATELLITENANTRIEB

METHOD AND DEVICE FOR ELECTRIC SATELLITE PROPULSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.08.2013 FR 1302017**

(43) Date de publication de la demande:
**06.07.2016 Bulletin 2016/27**

(73) Titulaire: **Thales**
**92400 Courbevoie (FR)**

(72) Inventeur: **KALTENBACH, Alexandre**
**Cannes 06150 (FR)**

(74) Mandataire: **Lopez, Frédérique**
**Marks & Clerk France**
**Immeuble Visium**
**22 Avenue Aristide Briand**
**94117 Arcueil Cedex (FR)**

(56) Documents cités:
**EP-A1- 0 780 300      EP-A1- 0 922 635**
**EP-A2- 1 227 037      US-A1- 2005 040 282**
**US-A1- 2005 205 717   US-B1- 6 260 805**

## Description

### Domaine technique

L'invention concerne le domaine des satellites et en particulier celui du transfert d'un satellite de l'orbite d'injection par le lanceur vers son orbite finale.

### Etat de la technique

Les développements récents de la propulsion électrique des satellites permettent d'envisager d'effectuer une grande partie du transfert en utilisant cette propulsion électrique. Cette propulsion ayant un bien meilleur rendement, il est alors possible de faire baisser la masse au lancement des satellites à mission égale.

L'inconvénient principal de la propulsion électrique est sa faible poussée, ce qui augmente sensiblement la durée nécessaire au transfert. De manière à maîtriser cette durée, il est alors nécessaire d'augmenter la poussée au maximum des capacités du satellite.

Une autre caractéristique des propulseurs électriques est le fait que le propulseur est optimisé pour son point de fonctionnement maximum. Lorsque le propulseur est utilisé avec une puissance moindre, son rendement (mN/W) et son impulsion spécifique diminuent.

Le coût des systèmes de propulsion électrique étant élevé, la configuration la plus courante est d'avoir 4 propulseurs montés sur des mécanismes de pointage. Ces ensembles propulseurs/mécanismes sont aménagés de préférence vers la face anti-terre du satellite.

Pour effectuer une manoeuvre de transfert électrique avec la poussée maximale, les 4 propulseurs sont utilisés en parallèle.

En cas de panne d'un des 4 propulseurs actifs, les solutions connues pour palier au manque d'un propulseur sont:

- soit d'utiliser 2 propulseurs. Or, l'inconvénient est que dans ce cas, la durée du transfert augmente. Dans le cas pire où la panne intervient au commencement du LEOP (Launch an Early Orbit Phase - Phase commençant à la séparation du lanceur et se terminant quand le satellite est opérationnel à son orbite finale) avec un dimensionnement en puissance où les 4 propulseurs sont utilisés à 100%, la durée du transfert peut être doublée ;
- soit d'utiliser les mécanismes sur lesquels sont montés les propulseurs afin de repointer les 3 propulseurs restants vers le centre de gravité. Or, l'inconvénient est que la consommation de Xenon augmente et la durée du transfert n'est pas optimisée.

Le brevet U.S. 6,260,805, qui est considéré comme l'art antérieur le plus proche, présente un dispositif de propulsion pour satellite ayant deux paires de propulseurs, dont un propulseur actif et un propulseur redondant pour chaque paire. Seule, chaque paire de propulseurs peut être réorientée.

Ainsi il existe le besoin d'une solution qui palie aux différents inconvénients des solutions de l'état de l'art pour effectuer un transfert électrique avec une poussée maximale en cas de panne d'un propulseur parmi les propulseurs actifs d'un satellite. La présente invention répond à ce besoin.

### Résumé de l'invention

Un objet de la présente invention est de proposer un dispositif pour permettre de palier à la déficience d'un propulseur de satellite lors d'un transfert vers son orbite en conservant une poussée maximale.

Le principe de l'invention consiste à équilibrer les couples induits par la poussée des propulseurs actifs de manière à maintenir les directions de poussée des propulseurs parallèles entre eux.

Avantageusement le dispositif de l'invention permet de maximiser la poussée efficace et optimiser la durée du transfert, tout en réduisant la consommation de Xenon.

Toujours avantageusement, en configuration nominale, dans le cas où la puissance à bord d'un satellite ne permet pas d'utiliser les propulseurs à 100% de leur poussée, le dispositif permet d'optimiser la durée du transfert nominal et la consommation de Xenon en faisant fonctionner le satellite sur trois propulseurs.

A cet effet, l'invention a pour objet un dispositif de propulsion électrique pour satellite équipé d'au moins quatre propulseurs actifs exerçant une poussée parallèle lors d'un transfert, le dispositif comprenant des moyens pour détecter une panne de propulseur et des moyens pour réorienter les propulseurs, le dispositif étant caractérisé en ce qu'il comprend des moyens pour calculer un angle de réorientation des propulseurs restant actifs lors d'une panne d'un propulseur, ledit angle étant calculé pour réorienter au moins deux des propulseurs restant actifs afin d'annuler le couple total autour du centre de masse du satellite.

De manière préférentielle, les propulseurs sont associés à des mécanismes aménagés vers la face anti-terre du satellite. Les propulseurs sont de préférence des propulseurs électriques, soit à effet Hall, soit étant des moteurs ioniques à grille.

Dans un mode de réalisation, tous les propulseurs actifs sont réorientés selon la valeur de l'angle calculé.

Dans un autre mode de réalisation, deux propulseurs actifs sont réorientées selon la valeur de l'angle calculé et le troisième reste pointé selon l'axe -Z.

L'invention couvre aussi un satellite qui comprend un dispositif de propulsion électrique tel que décrit, et en particulier un satellite équipé de quatre propulseurs.

**Description des figures**

Différents aspects et avantages de l'invention vont apparaitre en appui de la description d'un mode préféré d'implémentation de l'invention mais non limitatif, avec référence aux figures ci-dessous :

La Figure 1 illustre une configuration de transfert nominale utilisant 4 propulseurs ;
La Figure 2 est une projection sur un axe de la configuration de la figure 1 ;
La Figure 3 illustre une configuration de transfert utilisant 2 propulseurs en cas de panne ;
La Figure 4 illustre une configuration de transfert utilisant 3 propulseurs en cas de panne ;
La Figure 5 est une illustration d'un transfert utilisant 3 propulseurs selon un premier mode de l'invention ;
La Figure 6 est une illustration d'un transfert utilisant 3 propulseurs dans une autre configuration de l'invention.

**Description détaillée de l'invention**

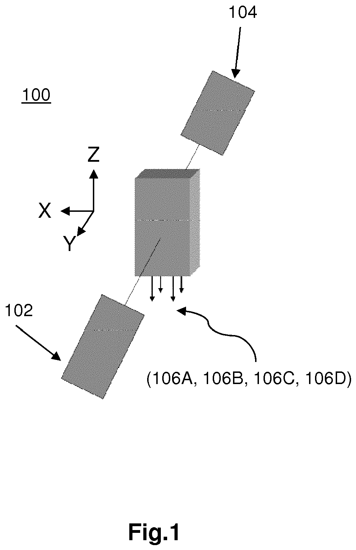

La figure 1 illustre schématiquement un satellite 100 sur lequel est implémenté avantageusement le dispositif de l'invention. Le satellite est généralement équipé de panneaux solaires (102,104) qui sont fixés aux murs Nord et Sud du satellite. Dans l'exemple choisi, le satellite est équipé de quatre propulseurs (106A, 106B, 106C, 106D) montés sur des mécanismes de pointage non représentés mais consistant en des éléments articulés permettant des mouvements d'orientation des propulseurs. Le brevet U.S. Patent 6,032,904 de D. Hosick décrit de tels dispositifs d'attache des propulseurs au satellite.

Les propulseurs sont de manière préférentielle des propulseurs électriques, typiquement des propulseurs à effet Hall ou des moteurs ioniques à grille.

Ces propulseurs sont montés sur un ou plusieurs mécanismes de pointage leur permettant d'avoir une direction de poussée égale ou similaire.

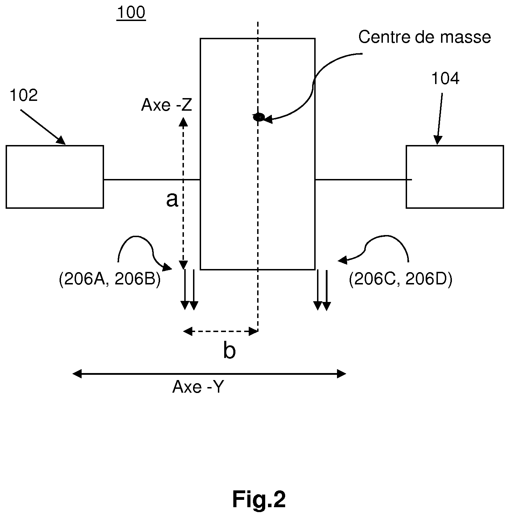

La figure 2 est une représentation simplifiée dans un plan YZ de la configuration générale quatre propulseurs de la figure 1. Les éléments identiques d'une figure à l'autre sont indiqués par les mêmes références. Pour des raisons de clarté de la description et de simplification, les propulseurs sont supposés être tous dans le plan YZ du centre de masse. Cependant l'homme du métier comprendra que les principes de la présente invention peuvent s'appliquer au cas plus général où les propulseurs ne sont pas tous dans le même plan. La position relative du centre de poussée des propulseurs par rapport au centre de masse se trouve à une distance notée 'a' sur l'axe -Z et à une distance notée 'b' sur l'axe -Y. La figure illustre un cas de transfert électrique optimal utilisant 4 propulseurs. Comme montré par les flèches (206A, 206B, 206C, 206D), les 4 propulseurs poussent dans la même direction. La poussée totale est donc 4 fois la poussée unitaire de chaque propulseur. Le contrôle de la trajectoire (pilotage) peut se faire de deux façons :

- soit la poussée de chaque propulseur est modulée de manière à ajuster la position du vecteur poussée global par rapport au centre de masse ;
- soit la direction de poussée de chaque propulseur est ajustée grâce à un mécanisme de pointage toujours de manière à ajuster la position du vecteur poussée global par rapport au centre de masse.

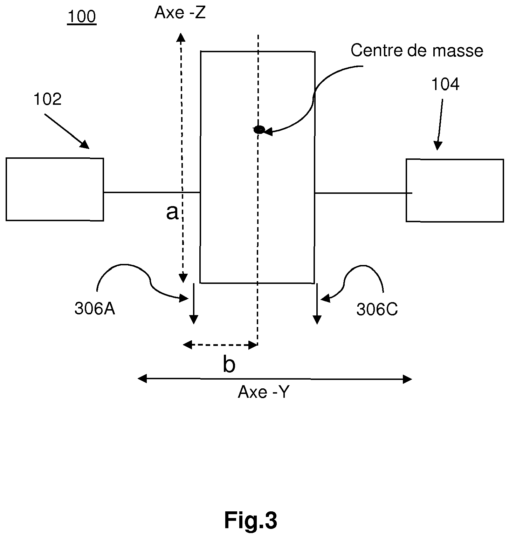

La figure 3 est une vue simplifiée selon un axe YZ dans le cas de panne d'un des quatre propulseurs d'un satellite tel celui de la figure 1. Dans le cas illustré, seules deux propulseurs actifs restants sont utilisés selon leur axe de poussée initial représenté par les flèches (306A, 306c). La poussée résultante n'est plus alors égale qu'à deux fois la poussée d'un propulseur, ce qui rallonge de manière significative le temps de transfert.

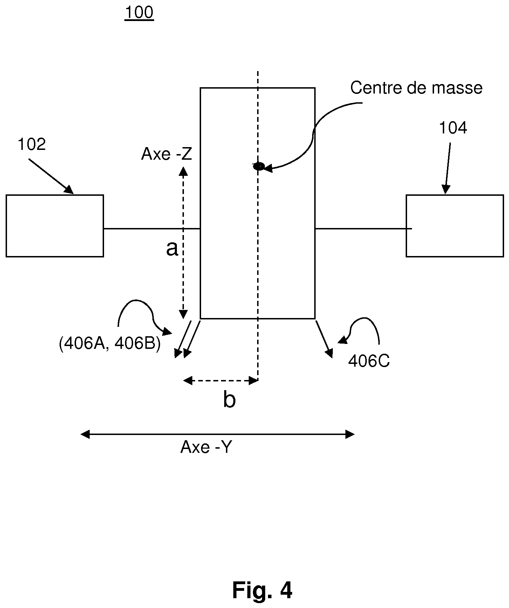

La figure 4 illustre sur une vue simplifiée selon un axe YZ, le cas de panne d'un des quatre propulseurs d'un satellite tel celui de la figure 1 où les trois propulseurs restants sont utilisés en étant réorientés. La réorientation est faite de manière à ce que la direction de poussée passe par le centre de masse, comme indiqué par les flèches (406A, 406B, 406C). La poussée globale n'est pas la somme des poussées des trois propulseurs, et le transfert n'est pas optimisé.

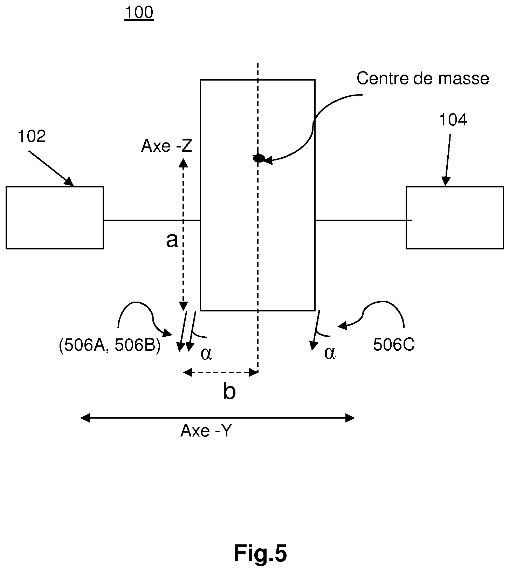

La figure 5 illustre sur une vue simplifiée selon un axe YZ, le cas de panne d'un des quatre propulseurs d'un satellite tel celui de la figure 1 avec une réorientation des trois propulseurs actifs restants selon le principe de l'invention. Quand une panne de propulseur est détectée, les propulseurs restants actifs sont réorientés pour permettre un transfert optimal utilisant tous les propulseurs actifs. La réorientation est calculée de manière à ce qu'un angle noté 'α' entre la direction de poussée d'un propulseur et l'axe -Z du satellite soit identique pour les trois propulseurs, l'angle étant calculé afin d'annuler le couple total autour du centre de masse du satellite. Tel qu'il est bien connu de l'homme du métier, en mécanique, un couple nul implique que la résultante des forces passe par le centre de masse.

D'une manière simplifiée, l'angle 'α' se calcule selon l'équation suivante :

$$(1) \quad \tan(\alpha) = b/(3a) \, ,$$

où

'a' est la distance sur l'axe 'Z' de la position relative du centre de poussée des propulseurs par rapport au centre de masse, et où 'b' est la distance sur l'axe 'Y' de la position relative du centre de poussée des propulseurs par rapport au centre de masse.

Il n'est pas apporté de description particulière sur les mécanismes de pointage qui permettent de réorienter les propulseurs quand l'angle de réorientation a été calculé, mais l'homme du métier appréciera que des mécanismes courants puissent être utilisés.

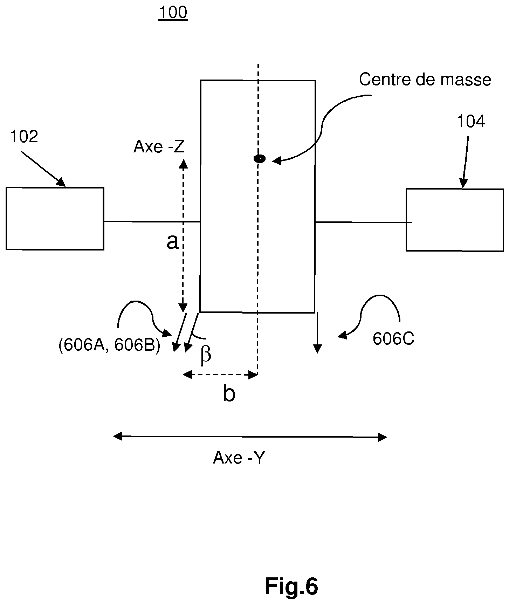

La figure 6 représente une variante d'application du principe de l'invention où une contrainte sur les mécanismes de pointage est appliquée afin de ne pas orienter la poussée des propulseurs « sous » le satellite. Cette contrainte peut venir soit de limite technologique pour les mécanismes, soit de l'aménagement d'autres équipements sur le satellite qui ne toléreraient pas d'interférences avec les jets plasmiques des propulseurs.

Dans la variante de la figure 6, l'angle de réorientation des propulseurs actifs est appliqué sur seulement deux propulseurs, le troisième n'étant pas réorienté et restant pointé en axe -Z sur l'exemple de la figure 6.

L'angle de réorientation noté 'β' à appliquer entre la direction de poussée de deux propulseurs et l'axe -Z du satellite se calcule selon la formule simplifiée, suivante :

$$(2) \quad b = 2\cos(\beta) * (b - a*\tan(\beta)) \, ,$$

où

'a' est la distance sur l'axe 'Z' de la position relative du centre de poussée des propulseurs par rapport au centre de masse, et où 'b' est la distance sur l'axe 'Y' de la position relative du centre de poussée des propulseurs par rapport au centre de masse.

Dans une variante d'implémentation, il est possible d'aménager des propulseurs supplémentaires, qui sont soit fixes et dirigés vers le centre de masse, soit montés sur des mécanismes d'orientation. Ces propulseurs supplémentaires permettent d'avoir un propulseur en redondance pour les cas où le satellite est suffisamment puissant pour utiliser 4 propulseurs ou plus en transfert. D'une manière plus générale, le dispositif permet d'avoir une redondance n+1 pour n propulseurs.

La présente description illustre une implémentation préférentielle de l'invention, mais n'est pas limitative. Un exemple a été choisi pour permettre une bonne compréhension des principes de l'invention, et une application concrète, mais il n'est en rien exhaustif et doit permettre à l'homme du métier d'apporter des modifications et variantes d'implémentation en gardant les mêmes principes.

**Revendications**

1. Un dispositif de propulsion pour satellite équipé d'au moins quatre propulseurs actifs exerçant une poussée parallèle lors d'un transfert, le dispositif comprenant des moyens pour détecter une panne de propulseur , des moyens pour réorienter les propulseurs, et des moyens pour calculer un angle de réorientation des propulseurs restants actifs lors d'une panne d'un propulseur, le dispositif étant **caractérisé en ce que** ledit angle de réorientation est calculé pour réorienter tous les propulseurs actifs restants selon le même angle de réorientation afin d'annuler le couple total autour du centre de masse du satellite.

2. Le dispositif selon la revendication 1 dans lequel les propulseurs sont associés à des mécanismes aménagés vers la face anti-terre du satellite.

3. Le dispositif selon les revendications 1 ou 2 dans lequel deux propulseurs actifs sont réorientés selon l'angle calculé.

**4.** Le dispositif selon l'une quelconque des revendications 1 à 3 dans lequel les propulseurs sont des propulseurs électriques.

**5.** Le dispositif selon la revendication 4 dans lequel les propulseurs sont des propulseurs à effet Hall.

**6.** Le dispositif selon la revendication 4 dans lequel les propulseurs sont des moteurs ioniques à grille.

**7.** Un satellite comprenant un dispositif selon l'une quelconque des revendications 1 à 6.

**8.** Une méthode pour réorienter des propulseurs d'un dispositif de propulsion électrique pour satellite équipé d'au moins quatre propulseurs actifs exerçant une poussée parallèle lors d'un transfert, la méthode comprenant les étapes de :

- détecter une panne de l'un des propulseurs ;
- calculer un angle de réorientation des propulseurs restants actifs, la valeur dudit angle étant calculée afin d'annuler le couple total autour du centre de masse du satellite; et
- réorienter de la valeur dudit angle tous les propulseurs restants actifs.

**Patentansprüche**

**1.** Antriebsvorrichtung für einen Satelliten, ausgerüstet mit mindestens vier aktiven Triebwerken, die bei einer Verlagerung einen parallelen Schub ausüben, wobei die Vorrichtung Mittel umfasst, um eine Triebwerksstörung zu erkennen, Mittel zum Nachführen der Triebwerke und Mittel zum Berechnen eines Nachführungswinkels der verbleibenden aktiven Triebwerke bei einer Störung eines Triebwerks, wobei die Vorrichtung **dadurch gekennzeichnet ist, dass** der Nachführungswinkel berechnet wird, um alle verbleibenden aktiven Triebwerke gemäß demselben Nachführungswinkel nachzuführen, um das gesamte Drehmoment um den Massenschwerpunkt des Satelliten zu annullieren.

**2.** Vorrichtung nach Anspruch 1, wobei die Triebwerke mit Mechanismen assoziiert sind, die zur erdabgewandten Seite des Satelliten angeordnet sind.

**3.** Vorrichtung nach den Ansprüchen 1 oder 2, wobei zwei aktive Triebwerke gemäß dem berechneten Winkel nachgeführt werden.

**4.** Vorrichtung nach einem der Ansprüche 1 bis 3, wobei die Triebwerke elektrische Triebwerke sind.

**5.** Vorrichtung nach Anspruch 4, wobei die Triebwerke Triebwerke mit Hall-Effekt sind.

**6.** Vorrichtung nach Anspruch 4, wobei die Triebwerke Ionenmotoren mit Gitter sind.

**7.** Satellit, umfassend eine Vorrichtung nach einem der Ansprüche 1 bis 6.

**8.** Verfahren zum Nachführen von Triebwerken einer elektrischen Antriebsvorrichtung für einen Satelliten, die mit mindestens vier aktiven Triebwerken ausgerüstet ist, die bei einer Verlagerung einen parallelen Schub ausüben, wobei das Verfahren die folgenden Schritte umfasst:

- Erkennen einer Störung von einem der Triebwerke;
- Berechnen eines Nachführungswinkels der verbleibenden aktiven Triebwerke, wobei der Wert des Winkels berechnet wird, um das gesamte Drehmoment um den Massenschwerpunkt des Satelliten zu annullieren; und
- Nachführen aller verbleibenden aktiven Triebwerke, um den Wert dieses Winkels.

**Claims**

**1.** A propulsion device for a satellite equipped with at least four active thrusters exerting a parallel thrust during a transfer, the device comprising means for detecting a thruster failure, means for reorienting the thrusters and means for computing a reorientation angle of the remaining active thrusters during a failure of a thruster, the device being **characterised in that** said reorientation angle is computed to reorient all the remaining active thrusters according to the same reorientation angle in order to cancel the total torque around the centre of mass of the satellite.

2. The device according to claim 1, wherein the thrusters are associated with mechanisms arranged towards the anti-earth face of the satellite.

3. The device according to claims 1 or 2, wherein two active thrusters are reoriented according to the computed angle.

4. The device according to any one of claims 1 to 3, wherein the thrusters are electric thrusters.

5. The device according to claim 4, wherein the thrusters are Hall-effect thrusters.

6. The device according to claim 4, wherein the thrusters are gated ion motors.

7. A satellite comprising a device according to any one of claims 1 to 6.

8. A method for reorienting thrusters of an electric propulsion device for a satellite equipped with at least four active thrusters exerting a parallel thrust during a transfer, the method comprising the following steps:

   - detecting a failure of one of the thrusters;
   - computing a reorientation angle of the remaining active thrusters, the value of said angle being computed in order to cancel the total torque around the centre of mass of the satellite; and
   - reorienting all the remaining active thrusters by the value of said angle.

Fig.1

Fig.2

Fig.3

Fig. 4

<u>100</u>

**Fig.5**

100

Centre de masse

104

102

Axe -Z

a

(606A, 606B)

β

b

606C

Axe -Y

Fig.6

## RÉFÉRENCES CITÉES DANS LA DESCRIPTION

**Documents brevets cités dans la description**

- US 6260805 B
- US 6032904 A, D. Hosick